# EUROPEAN PATENT SPECIFICATION

(11) **EP 0 686 598 B1**
(45) Date of publication and mention of the grant of the patent: **24.01.2001**
(21) Application number: 95201173.2
(22) Date of filing: 08.05.1995
(51) Int. Cl.: C01B 3/36, C22B 34/22, C01G 31/02

(54) **Process for the partial oxidation of a hydrocarbon feedstock**
Verfahren zur Partialoxidation von Kohlenwasserstoffen
Procédé pour l'oxydation partielle d'une charge d'hydrocarbures

(30) Priority: 11.05.1994 EP 94201329
(43) Date of publication of application: 13.12.1995
(73) Proprietor: NORSK HYDRO ASA, 0240 Oslo (NO)
(72) Inventor: Kowallik, Wolfgang, D-25524 Itzehoe (DE); Maaz, Hans Jürgen, D-25535 Brunsbüttel (DE); Soyez, Werner, B-3080 Vossem (BE)
(74) Representative: Bleukx, Luc

(56) References cited:
- EP-A- 0 542 322
- B. ELVERS ET AL. 'Ullmann's Encyclopedia of Industrial Chemistry' 1990 , VCH , GERMANY 173210 * page 4-20 - page 4-21 *
- HYDROCARBON PROCESSING, vol. 53, no. 12, December 1974 HOUSTON US, pages 79-87, S. STRELZOFF 'Partial oxidation for syngas and fuel'

## Description

The invention relates to a process for the partial oxidation of a hydrocarbon feedstock, comprising the steps of gasification, partial oxidation and removal of the carbon by forming a soot/ash water slurry, containing the unbumed carbon and ash, filtration of the soot/ash water slurry to form a filtercake of carbon and ash.

Such a process is known form EP-A-0542322.

In this patent application there is disclosed a process for the partial oxidation of hydrocarbons. A soot/ash mixture is separated from the product gas by water injection. The soot/ash mixture is filtered and the filter cake is then dried. Oxygen is added and the carbon is burned off at a temperature of around 800°C. A vanadium containing solid is retrieved. The temperature and oxygen partial pressure are chosen in such a way that not V₂O₅ is formed, but only VO₂. A separate dryer can be used for drying the filter cake, and the filter cake can be formed into granules. Drying takes place in e.g. a rack-dryer.

In this known process problems may arise with respect to the gaseous mixture leaving the top of the rack-dryer, as this contains apart from the combustion gases, high amounts of water, originating from the soot combustion. Treatment of the combustion gas requires therefore treatment of big volumes as a result of the high water content of the gas mixture.

It is the object of the invention to provide a process of the above mentioned type, wherein the above mentioned problems are avoided.

According to the invention this is achieved by transforming the filtercake into granules, that the granules are further dried by means of a fluid bed in a first step and the dried granules are burned at temperatures between 600°C and 1000°C.

Further essential features of the invention are as defined in the accompanying claims and will also appear from the detailed description of the invention below.
- Fig. 1: a representation of a simplified flow sheet of the process for partial oxidation of hydrocarbon feedstock in which the process according to the invention can be applied.
- Fig. 2A-2E: a representation of the flow sheet of the system to be used in the ash/soot treatment according to the invention.

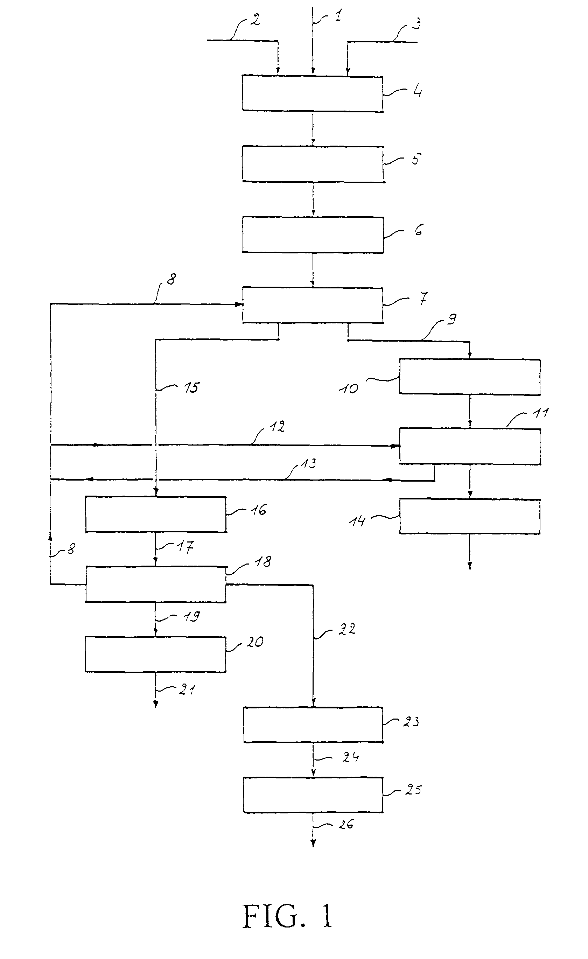

As shown in fig. 1 a mixture of hydrocarbon feedstock such as oil, oxygen and steam is supplied through lines 1, 2 and 3 to a reactor 4 in which the partial oxidation takes places. Typically this partial oxidation is performed at 1350° C under a pressure of 40-80 bar.

A typical composition of the gaseous reaction products is 48% H₂, 48% CO, 2,5 % CO₂ and 1,5 % H₂S.

The heat generated by the partial oxidation is recovered in a heat exchanger 5 and an economizer 6 whereupon the reaction products are transported to a water quench apparatus 7. Here the reaction products are washed with water supplied through line 8, as a result of which the ash is separated from the gaseous reaction products.

The gaseous reaction products are fed through line 9 through another economizer, 10, whereupon they are fed to a scrubber 11, in which they are scrubbed for a second time by means of water supplied through line 12 and returned through line 13.

The gaseous reaction products are thereupon fed to a H₂S-removal station 14, from which the gaseous reaction products can be supplied to their final use process, such as a gas turbine installation or a chemical process such as an ammonia plant.

The liquid phase originating from the water quench apparatus 7 and containing essentially ash, soot and water is fed through line 15 to a intermediate storage tank 16, acting as a buffer for the further treatment of the mixture ash, soot, water.

Basicly, the further treatment of the acqueous phase consists of these steps, filtration, drying and burning after which the ash is ready for further treatment in a metallurgical plant for recovery of vanadium.

As shown in Fig. 1, the acqueous phase containing water, ash and soot is fed through line 17 to a filtration system 18 which will be further described in more detail.

In the filtration system the ash/soot is dried to a solid/liquid ratio of 20/80 % by weight. The water separated from the acqueous mixture is partly returned to the water quench system 7 through line 8, and the surplus is fed through line 19 to a device 20 for removing HCN from the discharge water. From device 20 the water can be sent to the regular waste water system through line 21.
The amount of water returned to the device 7 through line 8 might be for example 80 % of the water leaving the filtration system, which means that about 20% water is sent through line 19 to the HCN removal device 20.

As shown in fig. 1 lines 12 and 13 serving the scrubber 11 with water are both connected to line 8, so that the scrubber 11 is operated by water directly originating from the filtration system 18.

The ash/soot mixture leaving the filtration system 18 through line 22 is supplied to a drying station 23 to be described in more detail further, whereas the ash/soot is dried to nearly 100 % solid. After drying the ash/soot mixture is fed through line 24 to a burning installation 25 wherein the carbon present in the ash/soot mixture is burned so that the carbon content is reduced to a level of 3 - 5 % by weight. The burning itself takes place under controlled operating conditions, for example at a temperature of 800 - 850 °C and a controlled residence time so that the formation of V₂O₅ can be avoided. The burned ash/soot mixture is further removed through line 26 and can be transported to a metallurgical process for recovery of the vanadium present in it.

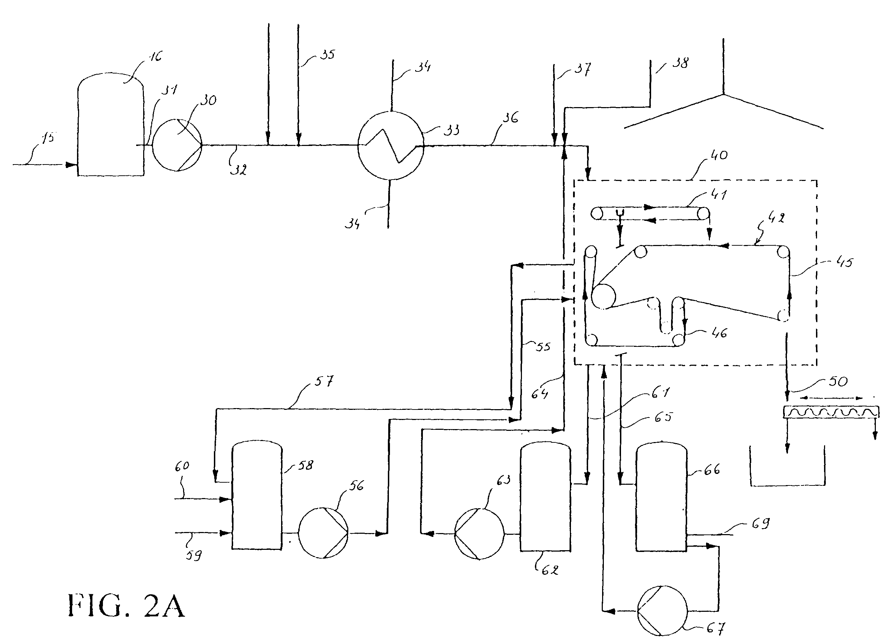

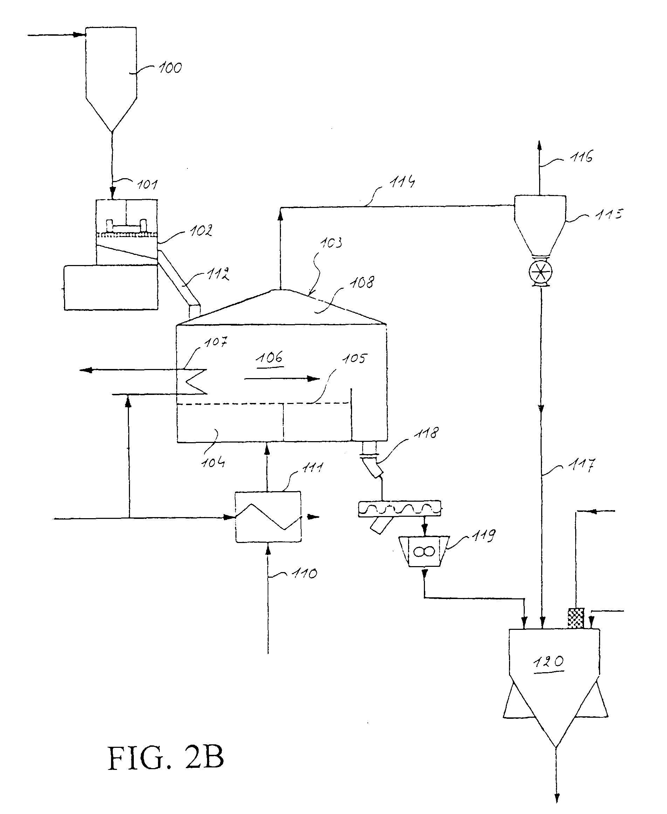

In Fig. 2B is shown a flow sheet of an installation for performing the filtration of the mixture ash/soot/water. The soot water is supplied to the intermediate storage vessel 16 through line 15. The soot water may for example contain 4 g/l solid. In the storage vessel the soot water is flashed at a temperature of about 120° C. The soot water is pumped by means of a pump 30 and lines 31 and 32 to a heat exchanger 33, in order to cool the soot water to a temperature of about 45° C. The heat is transferred to water supplied through lines 34 and steam is generated which can be used in other places in the process, e.g. for preheating air.

In view of the low temperature it is possible that calcium carbonate precipitation takes place at the inner wall of the tubes and heat exchanger. This can be avoided by the addition of a dispersing agent through line 35.

From the heat exchanger the soot water is supplied to the filtration unit 40 through line 36. In order to improve the filtration a flocculent may be added to the soot water.

Preferably a cationic and an anionic flocculent are added to the soot water through lines 37 and 38 respectively.

The filtration unit 40 comprises a first belt filter 41 and a press filter 42. The belt filter 41 comprises a continuous sieve belt running through an endless path around two rollers. The solids are retained by the belt sieve, whereas water is allowed to be removed by gravity. The solid content of the filter mass retained on the belt will be about 3% by weight. The filtrate collected by a gutter under the belt sieve contains less than 40 mg/l solids. It can directly be recycled as scrubber-feed water to the process.

The soot emulsion left on the sieve belt 41 falls down on to the pressure sieve 42 consisting of two endless sieve belts 45 and 46 running each around a number of rollers, and being in contact with each other in at least a part of their transport paths.

These types of pressure filtration is usual in the art. Herein the soot is dried especially in the pressure zone, when the two sieves belts run in parallel paths, so that the soot contains above 80% solid. This soot leaves the filtration through a line 80.

A typical composition of the soot after filtration may be

| | |
|---|---|
| Water | 80% |
| Solid | 20% |

**Table I**

| | | |
|---|---|---|
| Composition (% by weight) | C | 65,0 |
| | S | 1,7 |
| | Fe | 1,4 |
| | Ni | 2,1 |
| | V | 15,3 |
| | Mo | 0,3 |
| | Alkali | 0,3 |
| | earth alkali | 1,0 |
| | Si | 0,5 |
| | Anions | rest |

It is possible that the calcium carbonate present in the soot will precipate during filtration, and therefor can obstruct the filter sieves. Therefor the surface of the sieves are pickled in a discontinuous way by means of acetic acid supplied through line 55 by means of pump 56 and returned through line 57 to a storage vessel 58. The amount of acetic acid in the vessel 58 is maintained by addition of acetic acid and water through line 59 and 60.

The main stream of the filtrate is drained through line 65 into a storage vessel 66. From there it is recycled to the gasification process (line 69) to serve again as scrubber - and quench water and to be finally loaded again with process soot. A side stream out of the vessel 66 is pumped by pump 67 through line 68 into the filtration unit to serve as spraying water on the filtration belt. Another side stream, recollected at the bottom of the filtration unit 40 is fed through line 61 into a storage vessel 62. From here the water is pumped by pump 63 through line 64 to the entrance of the soot/water mixture into the filtration unit 40.

In the next step of the process, more specifically shown in Fig. 2B, the filtercake is dried further, so that the combustion is improved, especially more heat generated. The H₂S freed during drying is absorbed in the washing water and recycled to the process, thereby releaving the S-content in the dry soot product.

From the filtration unit 40, the filtercake, containing approximately 20% solid is fed through line 50 to an intermediate storage vessel 100. From the bottom of the intermediate storage vessel the filtrate is fed through line 101 to a granulating device, 102 wherein the filtrate is transformed into granules with fixed dimensions (e.g. cylindered particles with a diameter of 3 mm and a length of 3 mm).

The granulation step is done in order to obtain uniform particles, which guarantee a uniform end product after drying.

The drying apparatus 103 is of the fluid bed type and comprises three portions, the gas portion 104 having a sieve-like wall 105 for the equalized distribution of the gas, an intermediate portion 106 wherein heating pipes 107 are mounted and where the fluid bed is actually build up and a sucking head 108.

An fluidizing gas such as N₂, CO₂, air with low O₂ content, is supplied through line 110, heated in a heat exchanger 111 and through line 112 supplied to the gas portion 104 of the device 103. The soot product is fluidized by this gas stream and is dried by the heated gas and by the heat supplied through the pipes 107. The filtrate itself is supplied through pipe 112 from the granulating device 102 into the drying device 103, in fig. 2B the left part of it. The particles fall from above in the fluid bed layer and are gradually transported to the right hand side (as seen in Fig. 2B) where the particles are allowed to fall. The small particles of the filtrate which constitute about 20 - 25% by weight of the filtrate are carried along with the fluidizing gas and leave the fluid bed installation through pipe 114 into a cyclone 115, where the fine particles are separated from the fluidizing gas. The fluidizing gas leaves the cyclone 115 through line 116, the fine particles through line 117.

The other dried particles which are heavy enough not to be carried along with the fluidizing gas, leave the fluid bed through the outlet 118. They are crushed in a mill 119 and the generated small particles or dust are collected in a vessel 120, in which also the solid dust from cyclone 115 is transported through line 117. The particle-size is qualified as being 85% by weight less than 90 µm.

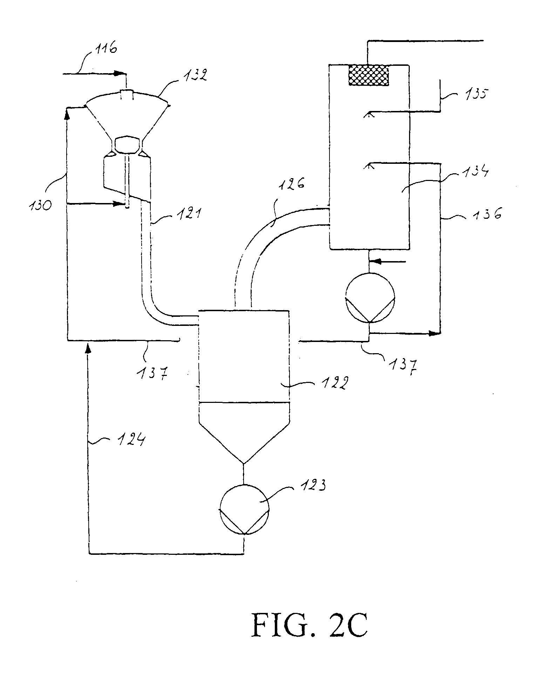

The treatment of the fluidizing gas coming from the cyclone 115 and still containing small particles of the filtrate is done by means of the process shown in Fig. 2C. The fluidizing gas is fed through line 111 to a Venturi-washing unit 132 where it is treated with water supplied through line 180.
At the same time the mixture is cooled to a temperature well below 100°C, e.g. 35°C, so that 80% of the water is condensed. The gas/water mixture obtained in the Venturi-device 142 is fed through line 121 to a cyclone 122, where the water is substantially removed from the mixture and collected at the bottom, from which it is returned to the Venturi device through pump 123 and line 124.
The gas phase from the cyclone 122 is fed through pipe 126 to a washing unit 134. Here the gas is washed again, either by process water supplied through line 135 and by recycled wash water with low soot content supplied through line 136.
The wash water is collected at the bottom of the device and partly returned through pump 137 and line 136 and partly used as supply water for the venturi-washing unit 132 through line 137 and 130.
The gas phase is collected in the top of the washing device 134 and returned to the fluid bed unit.

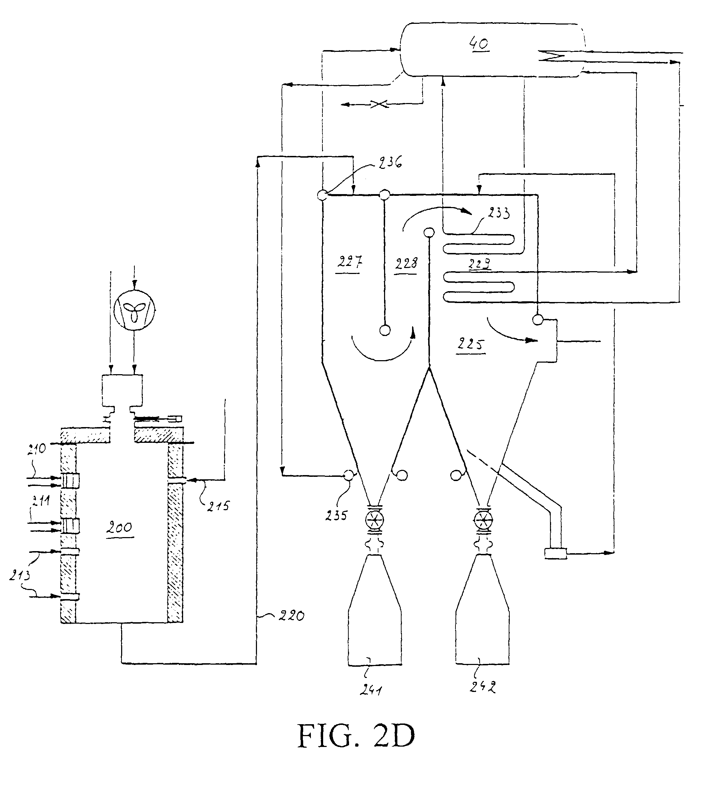

The next step in the process is the burning of the soot/ash mixture, as obtained as dry dust in the container 120. This part of the process is represented in Fig. 2D. The object of the burning is the reduction of the carbon-content, in order to make an ash suitable for the recovery of the 15% by weight of the vanadium contained therein.

The burning itself is preformed in the reactor 200, to which the ash is transported by means of combustion air, which is mixed with the soot powder. The burning must be performed under well controlled circumstances so that forming of vanadiumpentoxide can be avoided. For that reason the burning is done as a partial oxidation, 95-98% of the carbon being burned, so that 2 - 5% weight of carbon is still present in the ash after the burning. The partial oxygen pressure is therefor maintained at 10⁻⁷, 10⁻⁸ bar at temperature between 600°C and 1000°C, so that no forming of vanadiumpentoxide can occur.

Preferably the temperature is maintained between 700 - 850°C so that most of vanadium is transformed according to oxidation step IV, the endproduct of which having a high melting point (above 1300°C).

The reactor 200 itself is designed as a centrifugal burner. The soot/ash mixture is injected on two levels 210 and 211 through slots which are tangentially oriented with respect to the cylindrical burning chamber. Moreover a number of tangentially air slots 213 are provided, so that an air cushion is built up between the wall and the burning ash. Start up of the burning is done by means of a gas burner 215. The wall temperature can be maintained below 300°C. The shape of the burning is helicoidal. The combustion gas leaves the burner at temperatures of 800 - 850°C through a line 220 to be fed to a boiler 225.

In the boiler the burning gasses are cooled to about 200°C in order to produce steam. The difficulty here is to avoid the deposit of vanadium ashes to the walls of the boiler. The boiler comprises three parts 227, 228 and 229. The parts 227 and 228 are radiation parts, part 227 with descending gas and part 228 with ascending burning gas and the walls are double walled with natural water flow for preheating the water as indicated by the input point 235, and outlet point 236. The steam produced is 19 bar steam with a temperature below 300°C, so that there is no tendency for the ash to settle down on the walls. In the conversion part 218, the burning gas is in contact with heating pipe 233 for the heat transfer to water/steam, which heating pipes are also connected to a water reservoir 240.

Ash carried along with the burning gases is separated therefrom and is allowed to fall down and being collected in container 241 and 242. The collected ash can be used directly in a vanadium recovery process, as a natural - or - substitute.

### Example

In an installation of the type described above and using a soot with the composition according to Tabel I, the end results were as follows:
- containing ash: ca. 5 - 6 % of amount after filtration

| Analyze in | by weight |
|---|---|
| C | 2,0 |
| S | 0,5 |
| Fe | 4,1 |
| Ni | 6,2 |
| V | 46,2 |
| Mo | 1,0 |
| Alkali | 1,0 |
| Earth alkali | 3,2 |
| Si | 1,5 |
| Anionen | 34,4 |

- Gas emissions H₂O 0,55 Vol %

| | |
|---|---|
| CO₂ | 6,81 Vol % |
| O₂ | 13,89 Vol % |
| N₂ | 78,65 Vol % |

- No waste water. Positive stream production.

Although the invention has been described in more detail with respect to the treatment of ash originating from a partial oxidation/gasification process, it is clear that the invention is not restricted to such an ash, but that other originating from other oxidation processes can be used as well, provided they contain at least 60% by weight carbon.

## Claims

1. Process for the partial oxidation of a hydrocarbon feedstock, comprising the steps of gasification, partial oxidation and removal of the carbon by forming a soot/ash water slurry, containing the unburned carbon and ash, filtration of the soot/ash water slurry to form a filtercake of carbon and ash, characterized in that the filtercake is transformed into granules, that the granules are dried by means of a fluid bed in a first step and the dried granules are burned in a subsequent step at temperatures between 600°C and 1000°C.

2. Process according to claim 1, characterised in that the fluid bed is operated by means of an fluidising gas such as N₂, steam, CO₂, or air with low O₂-content.

3. Process according to claim 1 or 2,
characterised in that the temperature of the fluid bed gas is at least 150°C.

4. Process according to claim 3,
characterised in that the temperature of the fluid bed gas is at least 180°C.

5. Process according to one of the preceding claims,
characterised in that the dried granules are burned at temperatures between 700°C and 900°C.

6. Process according to one of the preceding claims,
characterised in that the dried granules are burned at temperatures between 750°C and 850°C.

7. Process according to one of the preceding claim,
characterised in that the burning in such circumstances that 2-5% by weight carbon is left in the resulting ash.

8. Process according to one of the preceding claims, wherein the soot/ash water slurry contains 5 to 15% by weight vanadium,
characterised in that the granules are burned at a temperature between 700°C and 850°C.

## Patentansprüche

1. Verfahren für die teilweise Oxidation eines aus Kohlenstoff bestehenden Ausgangsmaterials, welches als Verfahrensschritte umfasst; die Vergasung, die teilweise Oxidation und die Entfernung des Kohlenstoffs durch Bilden einer Ruß und Asche aufweisenden Wasseraufschlemmung, die unverbrannten Kohlenstoff und Asche enthält, das Filtrieren der Ruß und Asche aufweisenden Wasseraufschlemmung, um einen Filterkuchen aus Kohlenstoff und Asche zu bilden, dadurch gekennzeichnet, dass der Filterkuchen in Kömer umgewandelt wird, dass die Körner mit Hilfe eines Fließbettes in einem ersten Schritt getrocknet werden und dass die getrockneten Körner in einem nachfolgenden Schritt bei Temperaturen zwischen 600°C und 1 000°C verbrannt werden.

2. Verfahren gemäß Patentanspruch 1, dadurch gekennzeichnet, dass das Fließbett mit Hilfe eines fluidisierenden Gases, wie etwa N₂, Dampf, CO₂ oder Luft mit einem niedrigen O₂-Gehalt betrieben wird.

3. Verfahren gemäß Patentanspruch 1 oder 2, dadurch gekennzeichnet, dass die Temperatur des gasförmigen Fließbettes mindestens 150°C beträgt.

4. Verfahren gemäß Patentanspruch 3, dadurch gekennzeichnet, dass die Temperatur des gasförmigen Fließbettes mindestens 180°C beträgt.

5. Verfahren gemäß einem der vorhergehenden Patentansprüche, dadurch gekennzeichnet, dass die getrockneten Körner bei Temperaturen zwischen 700°C und 900°C verbrannt werden.

6. Verfahren gemäß einem der vorhergehenden Patentansprüche, dadurch gekennzeichnet, dass die getrockneten Körner bei Temperaturen zwischen 750°C und 850°C verbrannt werden.

7. Verfahren gemäß einem der vorhergehenden Patentansprüche, dadurch gekennzeichnet, dass das Verbrennen unter solchen Umstände stattfindet, dass 2-5 Gew.% an Kohlenstoff in der resultierenden Asche zurückbleiben.

8. Verfahren gemäß einem der vorhergehenden Patentansprüche, bei welchem die aus Ruß und Asche bestehende Wasseraufschlemmung 5 bis 15 Gew.% an Vanadium enthält, dadurch gekennzeichnet, dass die Körner bei einer Temperatur zwischen 700°C und 850°C verbrannt werden.

## Revendications

1. Procédé pour l'oxydation partielle d'une charge d'hydrocarbures, comprenant les étapes de gazéification, d'oxydation partielle et de retrait du carbone en formant une suspension aqueuse de suie et de cendre, contenant le carbone et la cendre qui n'ont pas été brûlés, de filtration de la suspension aqueuse de suie et de cendre pour former un gâteau de filtre de carbone et de cendre, caractérisé en ce que le gâteau de filtre est transformé en granules, en ce que les granules sont séchés au moyen d'un lit fluidisé dans une première étape et en ce que les granules séchés sont brûlés dans une étape ultérieure à des températures comprises entre 600°C et 1000°C.

2. Procédé suivant la revendication 1, caractérisé en ce que le lit fluidisé fonctionne au moyen d'un gaz de fluidisation tel que N₂, de la vapeur d'eau, CO₂ ou de l'air avec une faible teneur en O₂.

3. Procédé suivant la revendication 1 ou 2, caractérisé en ce que la température du gaz du lit fluidisé est au moins de 150°C.

4. Procédé suivant la revendication 3, caractérisé en ce que la température du gaz du lit fluidisé est au moins de 180°C.

5. Procédé suivant l'une quelconque des revendications précédentes, caractérisé en ce que les granules séchés sont brûlés à des températures comprises entre 700°C et 900°C.

6. Procédé suivant l'une quelconque des revendications précédentes, caractérisé en ce que les granules séchés sont brûlés à des températures comprises entre 750°C et 850°C.

7. Procédé suivant l'une quelconque des revendications précédentes, caractérisé en ce que la combustion est effectuée dans des conditions telles que 2-5 % en poids de carbone sont laissés dans la cendre résultante.

8. Procédé suivant l'une quelconque des revendications précédentes, dans lequel la suspension aqueuse de suie et de cendre contient de 5 à 15 % en poids de vanadium, caractérisé en ce que les granules sont brûlés à une température comprise entre 700°C et 850°C.
